# EUROPEAN PATENT SPECIFICATION

(11) **EP 1 386 887 B1**
(45) Date of publication and mention of the grant of the patent: **13.09.2006**
(21) Application number: 03016652.4
(22) Date of filing: 31.07.2003
(51) Int. Cl.: C02F 1/461

(54) **A method for producing electrolyzed water**
Verfahren zur Herstellung von elektrolysiertem Wasser
Procédé de production d'eau électrolysée

(30) Priority: 31.07.2002 JP 2002223208
(43) Date of publication of application: 04.02.2004
(73) Proprietor: First Ocean Co., Ltd., Yokohama-shi, Kanagawa-ken, 231-0066 (JP)
(72) Inventor: Sano, Yoichi, Kanagawa-ken (JP)
(74) Representative: Albrecht, Thomas

(56) References cited:
- EP-A- 0 408 229
- US-A- 5 578 193
- US-A1- 2002 027 084
- US-B1- 6 294 073

## Description

The present invention relates to a method for producing acidic electrolyzed water and alkaline electrolyzed water by electrolysis of water.

The production of acidic electrolyzed water and alkaline electrolyzed water by the electrolysis of the water in which chlorine electrolyte is added is usually put in practice. The acidic electrolyzed water has a range of pH from 2.0 to 3.5 and has a strong sterilizing effect against a colon bacillus, various germs and bacterium so that recently have started to be used broadly in a medical field, an agricultural field, a farming field and other fields. While, since the alkaline electrolyzed water has a range of pH from 10.5 to 12.0 and indicates strong alkaline, it is well-known that the alkaline electrolyzed water has a weak sterilizing effect and at the same time shows strong detergency against the stain containing oils and proteins. Therefore, the new applications of the alkaline electrolyzed as the wash water for vegetables, fruits, dairy products and marine products further for mechanical parts or electronic materials are gradually developed.

To produce these acidic electrolyzed water and alkaline electrolyzed water by electrolysis of water, for example, the method to use an electrolyzing apparatus having a structural feature to divide a chamber to an anode chamber and a cathode chamber by a diaphragm and arranging an anode plate in the anode chamber and a cathode plate in the cathode chamber and to carry out the electrolysis by filling the water to which electrolyte is previously added can be mentioned. Further, as the another example, the method to use an electrolyzing apparatus having a structural feature to divide a chamber to an anode chamber, an intermediate chamber and a cathode chamber by two diaphragms and filling high concentrated electrolyte in the intermediate chamber, while, filling water in the anode chamber and the cathode chamber, then carrying out the electrolysis can be mentioned. These methods are practically used.

In these methods, the scale stuck to the cathode plate or the generation of sludge shape precipitation in the alkaline electrolyzed water are pointed out as problems. Namely, the hardness components such as calcium or magnesium contained in water are stuck to the cathode plate as the scale which causes the serious problems such as the increase of electric resistance of electrodes, the loading of the diaphragm or the obstruction of water flow. Up to the time, the phenomenon that the scale sticks to the cathode is considered as an unavoidable phenomenon. As a countermeasure to avoid the sticking of scale, methods are known to remove the hardness components contained in the water by means of a water softener, washing the scale stuck to the cathode by acid or to release the scale by reversing the polarity of the electrodes. However, the practical carrying out of these countermeasures, are not advantageous from the viewpoint of cost or from the viewpoint of the troublesome process.

The present invention is carried out concerning above-mentioned circumstances and the object of the present invention is to provide the method for water electrolysis that can avoid the sticking of scale to the cathode and generation of sludge shape precipitation in the alkaline water at the production of acidic electrolyzed water and alkaline electrolyzed water by an easy way.

The inventors of the present invention, have continued the eager investigation to accomplish the above mentioned object and have found out that the sticking of scale to the cathode plate can be effectively avoided by combining two different technologies that are strictly restricted the water flow rate to the cathode chamber with regarding to the electric current to the cathode plate, and water softening treatment applied only to the water which is supplied to the cathode chamber, while producing of acidic electrolyzed water in the anode chamber and alkaline electrolyzed in the cathode chamber, and accomplished the present invention.

That is, the present invention is the method for producing of the electrolyzed water comprising,
using an electrolyzing apparatus of water having a structural feature to divide an electrolyzer to an anode chamber and a cathode chamber by a diaphragm and arranging an anode plate in the anode chamber and a cathode plate in the cathode chamber and to carry out the electrolysis by filling the water to which electrolyte is previously added,
wherein the flow rate of water to be provided to the cathode chamber is restricted to 40mL(milli liter)/min. per 1A (one ampere) of loading electric current or less, and previously softening the water provided to the cathode chamber.

Further, the present invention is the method for producing of the electrolyzed water comprising,
using an electrolyzing apparatus of water having a structural feature to divide an electrolyzer to an anode chamber, an intermediate chamber and a cathode chamber by two diaphragms and
arranging an anode plate in the anode chamber, a cathode plate in the cathode chamber and containing electrolyte solution in the intermediate chamber,
providing water to the anode chamber and cathode chamber of said electrolyzing apparatus of water,
and generating acidic water in the anode chamber and alkaline water in the cathode chamber by loading electric current so as to make electrolysis of the water under the presence of electrolyte supplied by means of electrophoresis from the intermediate chamber,
wherein the flow rate of water to be provided to the cathode chamber is restricted to 40mL/min. per 1A (one ampere) of loading electric current or less, and previously softening the water provided to the cathode chamber. Desirably, above-mentioned water softening treatment is carried out by passing the water through the water softening apparatus in which cationic exchange resin is filled up.

Preferably the flow rate of the water to be provided to the anode chamber is restricted to 40mL/min. per 1A (one ampere) of loading electric current or less. In a further preferred embodiment the water for dilution is mixed to the electrolyzed water produced in said anode chamber so as to prepare acidic electrolyzed water having a pH from 2.0 to 4.0 and the water for dilution is mixed to the electrolyzed water produced in said cathode chamber so as to prepare alkaline electrolyzed water having a pH from 10 to 13.

Fig.1 shows the cross sectional view of one example of the electrolyzing apparatus for water used for the method of the present invention.

Fig.2 shows the cross sectional view of another example of the electrolyzing apparatus for water used for the method of the present invention.

Fig.3 shows the cross sectional view of the other example of the electrolyzing apparatus for water used for the method of the present invention.

In the drawing each numerical numbers are,
1 and 2; diaphragm, 3 and 4; electrode plate, 5 and 9; water,
A, B and C; wall of electrolyzer, D; anode chamber,
E; cathode chamber, F; intermediate chamber, G and H; groove for water flow

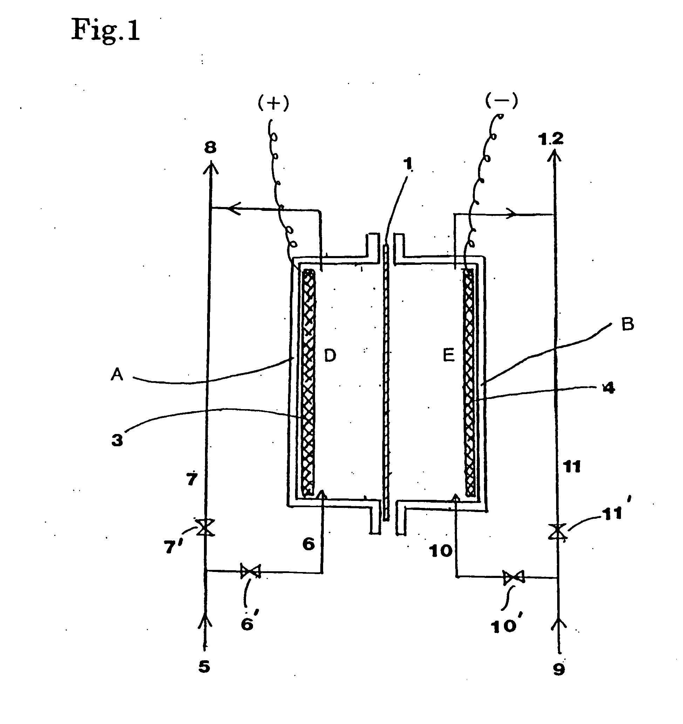

Fig.1 is the drawing showing the cross sectional view of one example of the electrolyzing apparatus for water used for the method of the present invention. That is, Fig.1 is the cross sectional view of the electrolyzing apparatus for water providing with an electrolyzer divided to an anode chamber and a cathode chamber by one diaphragm and arranging an anode plate to the anode chamber and a cathode plate to the cathode chamber. (A) and (B) respectively are the walls of the electrolyzer. This electrolyzer is divided to the anode chamber (D) and the cathode chamber (E). (3) and (4) is the electrode plate, and electrode (3) is used as an anode plate, and electrode (4) is used as a cathode plate. And 6', 7', 10', 11' are valves for adjusting the flow late of water.

The method for producing of anionic electrolyzed water and cationic electrolyzed water produced by electrolytic treatment of water will be illustrated using the water electrolyzing apparatus providing with the electrolyzer of Fig.1. The water (5) provided to an anode side is divided to the water to be electrolyzed (6) and the water not to be electrolyzed (7). To the water to be electrolyzed (6), a small amount of electrolyte is added and introduced to the anode chamber (D). This water to be electrolyzed (6) is electrolyzed in the anode chamber (D) and becomes the acidic electrolyzed water. The obtained acidic electrolyzed water can be used as is, or can be joined with the water not to be electrolyzed (7) and diluted to the desired pH (for example, pH2.0-4.0) so that to be used as the acidic electrolyzed water (8). In the meanwhile, the water provided to the cathode side (9) is divided to the water to be electrolyzed (10) and the water not to be electrolyzed (11). To the water to be electrolyzed (10), a small amount of electrolyte is added and provided to the anode chamber (E). This water to be electrolyzed (10) is electrolyzed in the cathode chamber and becomes alkaline electrolyzed water. The obtained alkaline electrolyzed water can be used as is, or can be joined with the water not to be electrolyzed (11) and diluted to the desired pH (for example, pH10.0-13.0) so that to be used as the alkaline electrolyzed water (12).

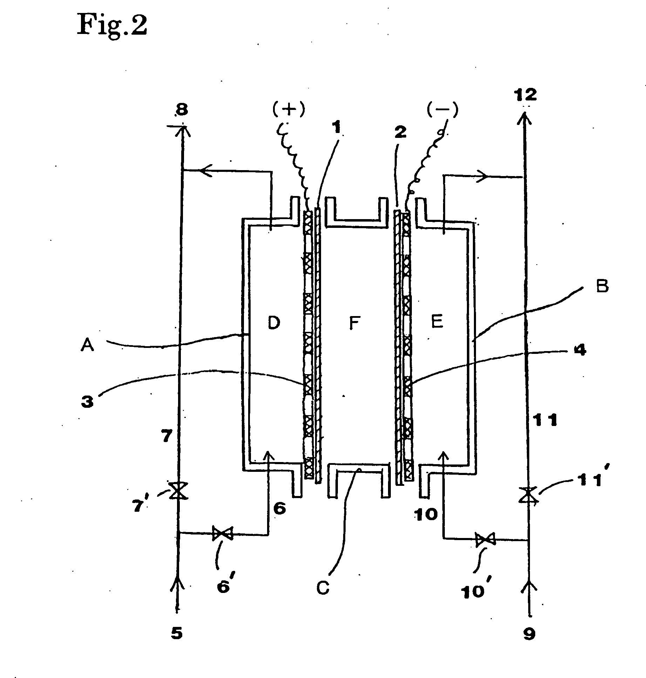

Fig.2 shows the cross sectional view of the water electrolyzing apparatus providing with the electrolyzer arranging an anode chamber and a cathode chamber by dividing with two diaphragms, used in the present invention. (A), (B) and (C) are respectively indicating a wall of the electrolyzer. This electrolyzer. is divided to an anode chamber (D), an intermediate chamber (F) and a cathode chamber (E) by two diaphragms (1) and (2). While (3) and (4) are an electrode plate, and the electrode plate (3) is the anode plate and the electrode plate (4) is the cathode plate. The electrode plate (3) and the diaphragms (1), and the electrode plate (4) and the diaphragms (2) can be separated or can be contacted. Fig.2 is the case that the electrode plate and the diaphragms are tightly contacted. As mentioned later, in the case when the electrode plate and the diaphragms are contacted, it is desirable to use an electrode plate that has holes and an electrically non-conductive material is put in between said electrode plates and said diaphragms or to use an electrode whose face is coated by electrically non-conductive material. In the intermediate chamber (F), electrolyte aqueous solution of high concentration is filled up. Ordinary, aqueous solution of sodium chloride or potassium chloride of over than 10% concentration is used. Further, said aqueous solution can be provided to the intermediate chamber (F) from the separated tank for electrolyte aqueous solution using a pump. The concentration of the electrolyte can be higher in the limit not to obstruct the fluidity of the aqueous solution. Further, 6', 7', 10' and 11' are the valves to adjust the amount of individual water flows to anode and cathode chamber and diluting water of acid and alkaline products.

The method for producing acidic electrolyzed water and alkaline electrolyzed water by electrolyzing of water will be illustrated more in detail according to the electrolyzing apparatus of water providing with the electrolyzer of Fig.2. The water (5) provided to the anode side is divided to two water that are to be electrolyzed (6) and not to be electrolyzed (7). The water to be electrolyzed (6) is led to the anode chamber (D). To the water to be electrolyzed (6) electrolyte is provided by electrophoresis from the intermediate chamber (F), and the water is electrolyzed and becomes acidic electrolyzed water. The obtained acidic electrolyzed water can be used as is, or can be joined with the water not to be electrolyzed (7) and diluted to the desired pH (for example, pH2.0-4.0) so that to be used as the acidic electrolyzed water (8). In the meanwhile, the water provided to the cathode side (9) is divided to the water to be electrolyzed (10) and the water not to be electrolyzed (11). The water to be electrolyzed (10) is led to the cathode chamber (E). To the water to be electrolyzed (10) electrolyte is provided by electrophoresis from the intermediate chamber (F), and the water is electrolyzed and becomes alkaline electrolyzed water. The obtained alkaline electrolyzed water can be used as is, or can be joined with the water not to be electrolyzed (11) and diluted to the desired pH (for example, pH10.0-13.0) so that to be used as the alkaline electrolyzed water (12).

In the present invention, at the electrolysis of water by means of the electrolyzing apparatus of water shown in Fig.1 or Fig.2, the water to be provided to the cathode chamber (E) is necessary to satisfy following two points. That is, the first one is to restrict the flow rate of the water to be provided to the anode chamber to 40mL/min. per 1A of loading electric current or less. And the second one is that the water to be provided to the cathode chamber is the water that is softened previously. By satisfying said two points, the sticking of scale to the cathode can be effectively avoided and the generation of sludge shape precipitation in the alkaline electrolyzed water can be prevented, further, the blockade trouble by precipitation of a pipe or a tank can be prevented.

Further, in the present invention, regarding the water to be provided to the cathode chamber (E), it is desirable to restrict the providing rate of water to 40mL/min. per 1A (ampere) of loading electric current or less and it is also desirable to restrict the providing rate of water to the anode chamber (D) to 40mL/min. per 1A (ampere) of loading electric current or less. By restricting the amount of water for electrolysis as above, the transfusing phenomenon of water from anode to cathode occurs at the electrolysis can be prevented and can elevate the concentration of free chlorine contained in acidic electrolyzed water.

Above-mentioned water softening treatment can be conveniently carried out by passing the water through water softening apparatus in which cationic exchange resin is filled up. For the softening treatment of the water to be provided in the cathode chamber (E) (water 10 to be electrolyzed), it is preferable to arrange a water softening apparatus in which cationic exchange resin is filled up, located in between the valve (10') and the cathode chamber (E) of the electrolyzer. As a cationic exchange resin, the cationic exchange resin using copolymer consisting of styrene and divinylbenzene or copolymer consisting of methacrylic acid and divinylbenzene as a mother resin and introducing acidic group such as sulfone group or carboxylic group to said mother resin as the exchanging group is used.

The object of the present invention can be accomplished by softening the water to be provided to the cathode chamber alone, among the whole water to be provided to the electrolyzing apparatus of water. The water to be provided to the cathode chamber to be electrolyzed (10) alone, which is a part of the water to be provided to the electrolyzing apparatus of water, is previously softened by passing the water through a water softening apparatus. And in the present invention, since the providing amount of water to be electrolyzed (10) is 40mL/min. per 1A of loading electric current or less and is recognized to be small, the size of a water softening apparatus in which cationic exchange resin is filled up can be minimized and the cycle for washing of cationic exchange resin can be extended. Therefore, by the present invention, above-mentioned operations are coupled together and effectively prevent the sticking of scale to the cathode.

For example, to generate 1000mL of acidic electrolyzed water and alkaline electrolyzed water respectively every minute, it is necessary to provide 2000mL of water to an electrolyzer every minute, therefore, in the case to soften whole water to be provided to the electrolyzer, it is necessary to soften 2000mL of water every minute. While, in the case of the present invention, the flow rate of water to be provided to the cathode and to be electrolyzed is 40mL/min. per 1A of loading electric current or less. This rate is converted to the case that produces 1000mL of acidic electrolyzed water and alkaline electrolyzed water respectively every minute. Since the electric current value loaded at the electrolysis process is generally approximately 6-10 ampere, the amount of water to be provided to the cathode and to be electrolyzed is 240mL or less in the case of 6 ampere and 400mL or less in the case of 10 ampere. That is, in the case of present invention, maximum amount of water for softening is 400mL per minute. This amount is less than 1/5 to 2000mL/min that is the necessary amount for softening of the conventional type. Therefore, in the present invention, the minimization of the size of a water softening apparatus becomes possible and the cycle for washing of cationic exchange resin can be extended.

The electrode and the diaphragm of the electrolyzing apparatus of water used in the present invention will be illustrated. The electrode and the diaphragm can be contacted or can be not contacted. In the case when the electrode and the diaphragm are used in contacted condition, a plate having various holes or a net is desirably used as an electrode. In the case when the electrode and the diaphragm are used with distance, it is not necessary to have a hole. As the material of the electrode, for example, a plate of copper, lead, nickel, chrome, titanium, tantalum, gold, platinum, iron oxide, stainless steel, carbon fiber or graphite can be mentioned, in particular, as the material of anode, platinum genus metal plated or baked titanium is desirably used. Further, as the material of cathode, platinum plated titanium is desirably used, however, chrome stainless steel (SUS316L) or nickel can be also used.

Still further, when above mentioned electrode plate with various holes is used in contact with a diaphragm, it is desirable to use an electrode plate prepared by arranging a sheet shape non-electrically conductive material which has corresponding holes to the electrode plate between each electrode plate and diaphragm, or to use an electrode plate with many holes to the surface of which facing to a diaphragm is coated by non-conductive film. As the concrete example of the material used for the sheet shape non-electrically conductive material, are synthetic resin such as fluororesin (registered Trade Mark: Teflon), ABS resin, acrylic resin, epoxy resin, polyurethane resin, polypropylene resin, nylon resin, polyethyleneterephthalate resin, polyamide resin and vinyl chloride resin, or natural rubber or elastomer such as SBR, chloroprene and polybutadiene. These electrode plates are disclosed in Japanese Patent Laid open publication 8-276184. These types of electrode plates are desirable to use because they do not generate electrolysis of water at the surface of the diaphragm side, therefore, the phenomenon that the staying gases between electrode and diaphragm and abstracting the flow of electric current can be reduced.

As the diaphragm, the material that has water permeability can be used, for examples, woven cloth or non-woven cloth such as polyvinylfluoride fiber, asbestos, glass wool, polyvinylchloride fiber, polyvinylidenechloride fiber, polyester fiber or aromatic polyamide fiber. As the another examples, which forms the diaphragm with mixing of woven cloth, non-woven cloth of polyester fiber, nylon fiber or polyethylene fiber as an aggregate, and chlorinated polyethylene, polyvinylchloride or polyvinylidenechloride are used as a film, or a diaphragm prepared with mixing of titanium oxide to said diaphragm can be mentioned. Furthermore, a semi-permeable membrane such as cellophane, cationic ion exchange membrane or anion exchange membrane can be used. The electrolysis condition of the present invention is to charge high load electric current to the small amount of water to be electrolysis so as to generate very strong acidic or alkaline water and generate high concentrated chlorine gas, it is desirable to select a diaphragm that can endure to the severe condition.

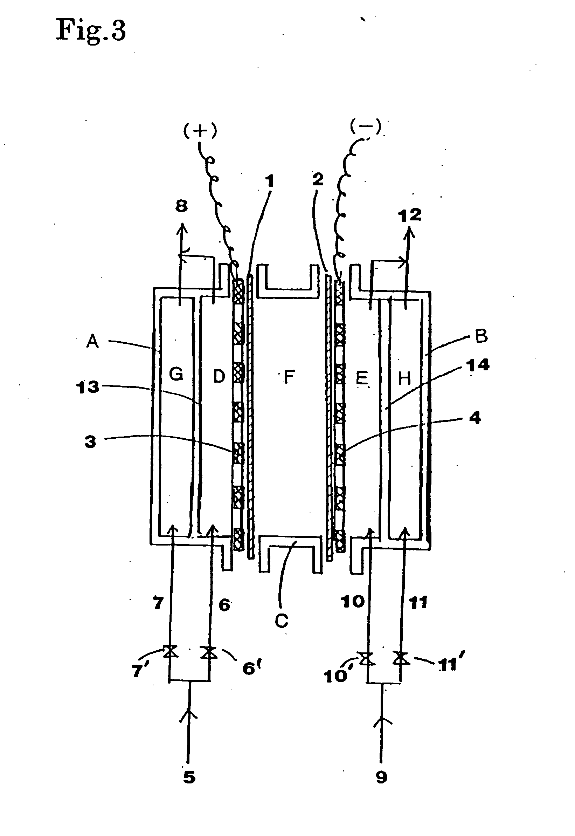

In the electrolyzing apparatus of water of Fig.2, as shown in Fig.3, the edge part of the anode chamber (D) is partitioned by a partition board 13 so as to form a groove (G), and the edge part of the cathode chamber (E) is partitioned by a partition board 14 so as to form a groove (H). Water not to be electrolyzed (7) can be flown in the groove (G) and water not to be electrolyzed (11) can be flown in the groove (H), and the water that flows in groove (G) and groove (H) acts conveniently as the coolant of the electrolyzer.

### EXAMPLES

### Example 1

The Example which uses the electrolyzing apparatus of water of Fig.2 will be substantially illustrated as follows. The size of the electrolyzer is; 15cm in length direction, 9cm in width direction and 6cm in thickness. As the electrode plate for anode (3), a platinum/iridium oxide baked titanium plate having many holes and whose actual surface area is 50cm² is used. While, as the electrode plate for cathode (4), a platinum plated titanium plate having many holes and whose actual surface area is 50cm² is used. At the actual use, a sheet of fluororesin (registered Trade Mark: Teflon), which is an electrically non-conductive material, having many holes is coated by non-conductive film to the diaphragm side of each electrode plate. As the diaphragm (1) used for the partition of the anode chamber (D) and the intermediate chamber (F), an anionic ion exchange membrane is used and as the diaphragm (2) used for the partition of the cathode chamber (E) and the intermediate chamber (F), a cationic ion exchange membrane is used. In the intermediate chamber (F), aqueous solution of approximately 30% sodium chloride is filled up as the electrolyte.

As the water (5) to be provided to the anode, city water is used, and is divided to the water to be electrolyzed (6) and the water not to be electrolyzed (7). The water to be electrolyzed (6) is introduced to the anode chamber (D) and generates acidic electrolyzed water by electrolysis. The obtained acidic electrolyzed water is joined and mixed with not electrolyzed water (7) and adjusted to the desired pH and flown out from the outlet (8), thus the acidic electrolyzed water of desired pH is obtained. Further, as the water (9) to be provided to the cathode, city water is used, and is divided to the water to be electrolyzed (10) and the water not to be electrolyzed (11). And the water to be electrolyzed (10) alone is softened by passing through a softening apparatus in which cationic exchange resin is filled up and introduced to the cathode chamber (E) and electrolyzed. Thus the alkaline electrolyzed water is generated. This alkaline electrolyzed water is joined with not electrolyzed water (11) and adjusted to the desired pH and flown out from the outlet (12), thus the alkaline electrolyzed water of desired pH is obtained.

The direct electric current loaded to the electrode is set to 6.5 ampere and the voltage at the operation is 6.7volt. The flow rate of water (6) to be electrolyzed and to be introduced to the anode chamber is adjusted to 100mL per minute, further, the flow rate of water (7) not to be electrolyzed is adjusted to 900mL per minute, then joined and mixed together with at the outlet and 1000mL per minute of acidic electrolyzed water is obtained. The pH value of the obtained acidic electrolyzed is 2.68, the ORP value is 1130mV and the measured value of contained free chlorine is 30ppm. While, the flow rate of water (10) to be electrolyzed and to be introduced to the cathode chamber is adjusted to 100mL per minute, further, the flow rate of water (11) not to be electrolyzed is adjusted to 900mL per minute, then joined and mixed together with at the outlet and 1000mL per minute of alkaline electrolyzed water is obtained. The pH value of the obtained alkaline electrolyzed water is 11.54. Maintaining same operating condition, the electrolysis experiment is continuously carried out for 48 hours, and the sticking of scale to the cathode is not observed at all. Further, the generation of precipitation is not observed in the obtained alkaline electrolyzed water.

### Comparative Example 1

In Example 1, the flow rate of water to be introduced to the cathode chamber (10) is adjusted to 100mL per minute, while in Comparative Example 1, the flow rate of water to be introduced to the cathode chamber (10) is adjusted to 1000mL per minute and the flow rate of water (11) not to be electrolyzed is adjusted to 0mL per minute. Other conditions are set same as to Example 1 and the electrolyzed water is produced.

After starting the electrolysis experiment, the voltage starts to elevate along with the time lapse, and after 48hours it becomes impossible to continue the electrolysis experiment because of high voltage. The reason why the phenomena can be considered is as follows. That is, because the hardness component is remaining in the water (10) to be introduced to the cathode chamber (E), and the remaining hardness component stuck to the cathode plate as the scale.

### Comparative Example 2

In Example 1, the water to be electrolyzed (10) is introduced to the cathode chamber (E) after passing through a softening apparatus in which cationic exchange resin is filled up and water is softened, while in the Comparative Example 2, the water to be electrolyzed (10) is introduced to the cathode chamber (E) without softening. Other conditions are set same as to Example 1 and the electrolyzed water is produced.

5000mL specimen of the alkaline electrolyzed water is picked out respectively from the alkaline electrolyzed water produced in Example 1 and Comparative Example 2. Each specimen is filtrated using two filtering paper (product of Tokyo Roshi Co., Ltd., Trade Mark "advantec" ) and weighted after dried up so that the residue can be measured. The results are summarized in Table 1.

**Table 1**

| | weight of filter paper before filtration (g) | weight of filter paper after filtration (g) | weight change before and after filtration (g) | required time to filter 5000mL |
|---|---|---|---|---|
| Example 1 | 1.6529 | 1.7183 | 0.0654 | 50 minutes |
| Co. Example 2 | 1.6238 | 2.0154 | 0.3923 | 6 hours |

It is clearly understood from Table 1 that the amount of precipitate in the alkaline electrolyzed water produced in Comparative Example 2 is greater than the amount of precipitate in the alkaline electrolyzed water produced in Example 1. And the filtering time for the alkaline electrolyzed water produced in Comparative Example 2 is remarkably longer than Example 2, because the filter paper of Example 2 is plugged with the precipitate. After the filtration, the yellowish adhesion is observed on the filter paper. Further, according to the results of Table 1, the amount of scale contained in alkaline electrolyzed water of the examples is calculated. The amount of scale contained in the alkaline electrolyzed water produced in Example 1 is 13 ppm and that of Comparative Example 2 is 78 ppm.

### EFFECT OF THE INVENTION

In the case of conventional method for producing electrolyzed water, there are problems of sticking of scale to a cathode plate at the electrolysis operation and the sludge shape precipitation in the alkaline electrolyzed water. However, according to the present invention, the sticking of scale to the cathode plate and the generation of the sludge shape precipitation in the alkaline electrolyzed water can be effectively avoided, and can effectively produce the acidic electrolyzed water and alkaline electrolyzed water.

## Claims

1. A method for producing of electrolyzed water comprising,
using an electrolyzing apparatus of water having a structural feature to divide an electrolyzer to an anode chamber and a cathode chamber by a diaphragm and arranging an anode plate in the anode chamber and a cathode plate in the cathode chamber and to carry out the electrolysis by filling the water to which electrolyte is previously added,
wherein the flow rate of water to be provided to the cathode chamber is restricted to 40mL/min. per 1A (ampere) of loading electric current or less, and softening previously the water provided to the cathode chamber alone.

2. A method for producing of electrolyzed water comprising,
using an electrolyzing apparatus of water having a structural feature to divide an electrolyzer to an anode chamber, an intermediate chamber and a cathode chamber by two diaphragms and
arranging an anode plate in the anode chamber, a cathode plate in the cathode chamber and containing electrolyte solution in the intermediate chamber,
providing water to the anode chamber and cathode chamber of said electrolyzing apparatus of water,
and generating acidic water in the anode chamber and alkaline water in the cathode chamber by loading electric current so as to make electrolysis of the water under the presence of electrolyte supplied by means of electrophoresis from the intermediate chamber,
wherein the flow rate of water to be provided to the cathode chamber is restricted to 40mL/min. per 1A (ampere) of loading electric current or less, and softening previously the water provided to the cathode chamber alone.

3. The method for producing of electrolyzed water of claim 1 or claim 2,
wherein the water softening treatment is carried out by passing the water through the water softening apparatus in which cationic exchange resin is filled up.

4. The method for producing of electrolyzed water according to any one of claims 1 to 3, wherein the flow rate of water to be provided to the anode chamber is restricted to 40mL/min. per 1A (ampere) of loading electric current or less

5. The method for producing of electrolyzed water according to any one of claims 1 to 4, wherein the water for dilution is mixed to the electrolyzed water produced in the anode chamber so as to prepare acidic electrolyzed water having a pH from 2.0 to 4.0 and the water for dilution is mixed to the electrolyzed water produced in the cathode chamber so as to prepare alkaline electrolyzed water having a pH from 10 to 13.

## Patentansprüche

1. Verfahren zur Herstellung von elektrolysiertem Wasser, umfassend die Verwendung einer Elektrolysierapparatur für Wasser mit einem strukturellen Merkmal zum Teilen eines Elektrolysators in eine Anodenkammer und eine Kathodenkammer durch ein Diaphragma und das Anordnen einer Anodenplatte in der Anodenkammer und einer Kathodenplatte in der Kathodenkammer zum Durchführen der Elektrolyse durch Einfüllen des Wassers, in das vorher Elektrolyt gegeben wird, wobei die Flussrate an Wasser, das der Kathodenkammer zur Verfügung gestellt werden soll, auf 40 ml/min pro 1 A (Ampere) elektrischen Ladestroms oder weniger beschränkt ist, und das vorherige Enthärten des Wassers für die Kathodenkammer allein.

2. Verfahren zur Herstellung von elektrolysiertem Wasser, umfassend das Verwenden einer Elektrolysierapparatur für Wasser mit einem strukturellen Merkmal zum Teilen eines Elektrolysators in eine Anodenkammer, eine Zwischenkammer und eine Kathodenkammer durch zwei Diaphragmen und das Anordnen einer Anodenplatte in der Anodenkammer, einer Kathodenplatte in der Kathodenkammer, wobei Elektrolytlösung in der Zwischenkammer enthalten ist,
das Zuführen von Wasser in die Anodenkammer und die Kathodenkammer der Elektrolysierapparatur für Wasser,
und das Erzeugen von saurem Wasser in der Anodenkammer und alkalischem Wasser in der Kathodenkammer durch einen elektrischen Ladestrom, um eine Elektrolyse des Wassers in der Gegenwart des mittels Elektrophorese aus der Zwischenkammer zugeführten Elektrolyten durchzuführen,
wobei die Flussrate an Wasser, das der Kathodenkammer zu Verfügung gestellt werden soll, auf 40 ml/min pro 1 A (Ampere) elektrischen Ladestroms oder weniger beschränkt ist, und vorheriges Enthärten des Wassers für die Kathodenkammer allein.

3. Verfahren zur Herstellung von elektrolysiertem Wasser nach Anspruch 1 oder 2, wobei die Wasserenthärtungsbehandlung durchgeführt wird, indem das Wasser durch die Wasserenthärtungsapparatur geführt wird, in die ein kationisches Austauschharz eingefüllt ist.

4. Verfahren zur Herstellung von elektrolysiertem Wasser nach einem der voranstehenden Ansprüche 1 bis 3, wobei die Flussrate an Wasser, das der Anodenkammer zur Verfügung gestellt werden soll, auf 40 ml/min pro 1 A (Ampere) elektrischen Ladestroms oder weniger beschränkt ist.

5. Verfahren zur Herstellung von elektrolysiertem Wasser nach einem der Ansprüche 1 bis 4, wobei das Wasser zur Verdünnung dem in der Anodenkammer hergestellten elektrolysierten Wasser beigemischt wird, um saures elektrolysiertes Wasser mit einem pH-Wert von 2,0 bis 4,0 herzustellen, und das Wasser zur Verdünnung dem in der Kathodenkammer hergestellten elektrolysierten Wasser beigemischt wird, um alkalisches elektrolysiertes Wasser mit einem pH-Wert von 10 bis 13 herzustellen.

## Revendications

1. Procédé de production d'eau électrolysée comprenant,
l'utilisation d'un appareil d'électrolyse d'eau ayant une caractéristique structurelle pour diviser un électrolyseur en une chambre d'anode et une chambre de cathode par un diaphragme et le placement d'une plaque d'anode dans la chambre d'anode et d'une plaque de cathode dans la chambre de cathode et pour réaliser l'électrolyse en introduisant l'eau à laquelle a été précédemment ajouté un électrolyte,
dans lequel le débit de l'eau à acheminer vers la chambre de cathode est limité à 40 mL/min pour 1 A (ampère) de charge de courant électrique ou moins, et l'eau est adoucie avant d'être acheminée vers la chambre de cathode uniquement.

2. Procédé de production d'eau électrolysée comprenant,
l'utilisation d'un appareil d'électrolyse d'eau ayant une caractéristique structurelle pour diviser un électrolyseur en une chambre d'anode, une chambre intermédiaire et une chambre de cathode par deux diaphragmes, et
le placement d'une plaque d'anode dans la chambre d'anode, d'une plaque de cathode dans la chambre de cathode et le maintien d'une solution d'électrolyte dans la chambre intermédiaire,
l'acheminement d'eau vers la chambre d'anode et vers la chambre de cathode dudit appareil d'électrolyse d'eau,
et la production d'une eau acide dans la chambre d'anode et d'une eau alcaline dans la chambre de cathode en chargeant un courant électrique afin de réaliser l'électrolyse de l'eau en présence d'un électrolyte fourni au moyen d'une électrophorèse à partir de la chambre intermédiaire,
dans lequel le débit de l'eau à acheminer vers la chambre de cathode est limité à 40 mL/min pour 1 A (ampère) de charge de courant électrique ou moins, et l'eau est adoucie avant d'être acheminée vers la chambre de cathode uniquement.

3. Procédé de production d'eau électrolysée selon la revendication 1 ou la revendication 2, dans lequel le traitement d'adoucissement d'eau est réalisé en passant l'eau à travers l'appareil d'adoucissement d'eau dans lequel est introduite une résine échangeuse de cations.

4. Procédé de production d'eau électrolysée selon l'une quelconque des revendications 1 à 3, dans lequel le débit de l'eau à acheminer vers la chambre d'anode est limité à 40 mL/min pour 1 A (ampère) de charge de courant électrique ou moins.

5. Procédé de production d'eau électrolysée selon l'une quelconque des revendications 1 à 4, dans lequel l'eau de dilution est mélangée à l'eau électrolysée produite dans la chambre d'anode afin de préparer une eau électrolysée acide ayant un pH de 2,0 à 4,0 et l'eau de dilution est mélangée à l'eau électrolysée produite dans la chambre de cathode afin de préparer une eau électrolysée alcaline ayant un pH de 10 à 13.
